# EUROPEAN PATENT APPLICATION

(11) **EP 4 625 132 A1**
(43) Date of publication of application: **01.10.2025**
(21) Application number: 25159622.7
(22) Date of filing: 24.02.2025
(51) Int. Cl.: G06F 3/06, G06F 13/12, G06F 13/16, G06F 13/40, G06F 13/28, G06F 12/1081, H04L 69/22, H04L 49/356, H04L 49/901

(54) **NETWORK CONTROLLER LOW LATENCY DATA PATH**

(30) Priority: 29.03.2024 US 202418621842
(71) Applicant: INTEL Corporation, Santa Clara, CA 95054 (US)
(72) Inventor: KASICHAINULA, Kishore, Johns Creek, 30022 (US)
(74) Representative: Maiwald GmbH

(57) **Abstract**

A network controller (430) is coupled to a memory (435) associated with a hardware accelerator (425) and includes a first port (510) to couple to a host system, wherein the host system comprises system memory (440) and a second port to receive data over a network. The network controller (430) comprises circuitry (605, 610, 615) to determine that the data is to be written directly to the memory (435) instead of to the system memory (440) and write the data to the memory (435) for consumption by the hardware accelerator (425).

## Description

### TECHNICAL FIELD

This disclosure relates in general to the field of computer networking, and more particularly, though not exclusively, to the use of high bandwidth memory to establish an alternative low latency data path for a network controller.

### BACKGROUND

Computing architectures continue to evolve, with distributed computing environments playing an increasingly prominent role in the development of new and improved computing applications. Such architectures may include cloud computing, edge computing, machine-to-machine, and Internet of Things (IoT) systems, among other examples. With these new applications and architectures and the expansion of computing into automotive, robotics, and artificial intelligence, computer-driven tasks that have low latency demands are also increasing.

### BRIEF DESCRIPTION OF THE DRAWINGS

The present disclosure is best understood from the following detailed description when read with the accompanying figures. It is emphasized that, in accordance with the standard practice in the industry, various features are not necessarily drawn to scale, and are used for illustration purposes only. Where a scale is shown, explicitly or implicitly, it provides only one illustrative example. In other embodiments, the dimensions of the various features may be arbitrarily increased or reduced for clarity of discussion.
FIG. 1 illustrates a simplified block diagram illustrating example components of a data center.
FIG. 2 illustrates a simplified block diagram illustrating an example computing system.
FIG. 3 illustrates a simplified block diagram illustrating an example computing device.
FIG. 4 illustrates a simplified block diagram illustrating an example computing architecture including a specialized processing device, a block of high-bandwidth memory, and a network controller device.
FIG. 5 illustrates a simplified block diagram illustrating an example accelerator device coupled to a host system.
FIG. 6 illustrates a block diagram of an example network controller device.
FIG. 7 illustrates a diagram of an example address mapping table.
FIGS. 8A-8B are diagrams illustrating example descriptor data structures.
FIG. 9 illustrates a simplified flow diagram showing an example transmit data flow.
FIG. 10 illustrates a simplified flow diagram showing an example receive data flow.

### EMBODIMENTS OF THE DISCLOSURE

The following disclosure provides many different embodiments, or examples, for implementing different features of the present disclosure. Specific examples of components and arrangements are described below to simplify the present disclosure. These are, of course, merely examples and are not intended to be limiting. Further, the present disclosure may repeat reference numerals and/or letters in the various examples. This repetition is for the purpose of simplicity and clarity and does not in itself dictate a relationship between the various embodiments and/or configurations discussed. Different embodiments may have different advantages, and no particular advantage is necessarily required of any embodiment.

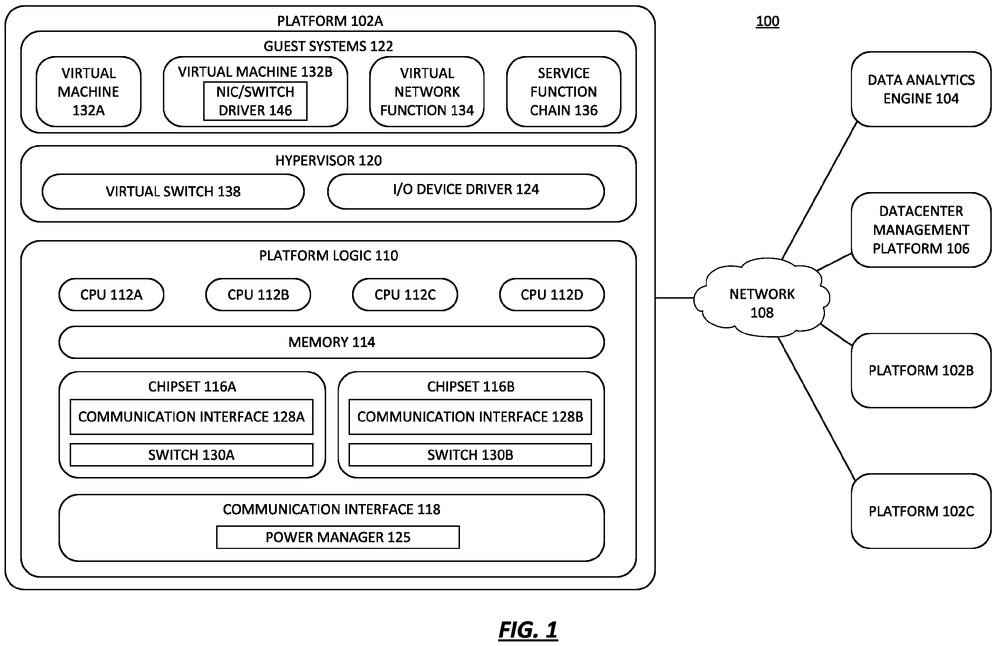

FIG. 1 illustrates a block diagram of components of a datacenter 100 in accordance with certain embodiments. In the embodiment depicted, datacenter 100 includes a plurality of platforms 102, data analytics engine 104, and datacenter management platform 106 coupled together through network 108. A platform 102 may include platform logic 110 with one or more central processing units (CPUs) 112, memories 114 (which may include any number of different modules), chipsets 116, communication interfaces 118, and any other suitable hardware and/or software to execute a hypervisor 120 or other operating system capable of executing processes associated with applications running on platform 102. In some embodiments, a platform 102 may function as a host platform for one or more guest systems 122 that invoke these applications. The platform may be logically or physically subdivided into clusters and these clusters may be enhanced through specialized networking accelerators and the use of Compute Express Link (CXL) memory semantics to make such cluster more efficient, among other example enhancements.

A platform 102 may include platform logic 110. Platform logic 110 comprises, among other logic enabling the functionality of platform 102, one or more CPUs 112, memory 114, one or more chipsets 116, and communication interface 118. Although three platforms are illustrated, datacenter 100 may include any suitable number of platforms. In various embodiments, a platform 102 may reside on a circuit board that is installed in a chassis, rack, compossible servers, disaggregated servers, or other suitable structures that comprises multiple platforms coupled together through network 108 (which may comprise, e.g., a rack or backplane switch).

CPUs 112 may comprise any suitable number of processor cores. The cores may be coupled to each other, to memory 114, to at least one chipset 116, and/or to communication interface 118, through one or more controllers residing on CPU 112 and/or chipset 116. In particular embodiments, a CPU 112 is embodied within a socket that is permanently or removably coupled to platform 102. Although four CPUs are shown, a platform 102 may include any suitable number of CPUs. In some implementations, application to be executed using the CPU (or other processors) may include physical layer management applications, which may enable customized software-based configuration of the physical layer of one or more interconnect used to couple the CPU (or related processor devices) to one or more other devices in a data center system.

Memory 114 may comprise any form of volatile or non-volatile memory including, without limitation, magnetic media (e.g., one or more tape drives), optical media, random access memory (RAM), read-only memory (ROM), flash memory, removable media, or any other suitable local or remote memory component or components. Memory 114 may be used for short, medium, and/or long-term storage by platform 102. Memory 114 may store any suitable data or information utilized by platform logic 110, including software embedded in a computer readable medium, and/or encoded logic incorporated in hardware or otherwise stored (e.g., firmware). Memory 114 may store data that is used by cores of CPUs 112. In some embodiments, memory 114 may also comprise storage for instructions that may be executed by the cores of CPUs 112 or other processing elements (e.g., logic resident on chipsets 116) to provide functionality associated with components of platform logic 110. Additionally or alternatively, chipsets 116 may comprise memory that may have any of the characteristics described herein with respect to memory 114. Memory 114 may also store the results and/or intermediate results of the various calculations and determinations performed by CPUs 112 or processing elements on chipsets 116. In various embodiments, memory 114 may comprise one or more modules of system memory coupled to the CPUs through memory controllers (which may be external to or integrated with CPUs 112). In various embodiments, one or more particular modules of memory 114 may be dedicated to a particular CPU 112 or other processing device or may be shared across multiple CPUs 112 or other processing devices.

A platform 102 may also include one or more chipsets 116 comprising any suitable logic to support the operation of the CPUs 112. In various embodiments, chipset 116 may reside on the same package as a CPU 112 or on one or more different packages. A chipset may support any suitable number of CPUs 112. A chipset 116 may also include one or more controllers to couple other components of platform logic 110 (e.g., communication interface 118 or memory 114) to one or more CPUs. Additionally or alternatively, the CPUs 112 may include integrated controllers. For example, communication interface 118 could be coupled directly to CPUs 112 via integrated I/O controllers resident on the respective CPUs.

Chipsets 116 may include one or more communication interfaces 128. Communication interface 128 may be used for the communication of signaling and/or data between chipset 116 and one or more I/O devices, one or more networks 108, and/or one or more devices coupled to network 108 (e.g., datacenter management platform 106 or data analytics engine 104). For example, communication interface 128 may be used to send and receive network traffic such as data packets. In a particular embodiment, communication interface 128 may be implemented through one or more I/O controllers, such as one or more physical network interface controllers (NICs), also known as network interface cards or network adapters. An I/O controller may include electronic circuitry to communicate using any suitable physical layer and data link layer standard such as Ethernet (e.g., as defined by an IEEE 802.3 standard), Fibre Channel, InfiniBand, Wi-Fi, or other suitable standard. An I/O controller may include one or more physical ports that may couple to a cable (e.g., an Ethernet cable). An I/O controller may enable communication between any suitable element of chipset 116 (e.g., switch 130) and another device coupled to network 108. In some embodiments, network 108 may comprise a switch with bridging and/or routing functions that is external to the platform 102 and operable to couple various I/O controllers (e.g., NICs) distributed throughout the datacenter 100 (e.g., on different platforms) to each other. In various embodiments an I/O controller may be integrated with the chipset (i.e., may be on the same integrated circuit or circuit board as the rest of the chipset logic) or may be on a different integrated circuit or circuit board that is electromechanically coupled to the chipset. In some embodiments, communication interface 128 may also allow I/O devices integrated with or external to the platform (e.g., disk drives, other NICs, etc.) to communicate with the CPU cores.

Switch 130 may couple to various ports (e.g., provided by NICs) of communication interface 128 and may switch data between these ports and various components of chipset 116 according to one or more link or interconnect protocols, such as Peripheral Component Interconnect Express (PCIe), Compute Express Link (CXL), HyperTransport, GenZ, OpenCAPI, and others, which may each alternatively or collectively apply the general principles and/or specific features discussed herein. Switch 130 may be a physical or virtual (i.e., software) switch.

Platform logic 110 may include an additional communication interface 118. Similar to communication interface 128, communication interface 118 may be used for the communication of signaling and/or data between platform logic 110 and one or more networks 108 and one or more devices coupled to the network 108. For example, communication interface 118 may be used to send and receive network traffic such as data packets. In a particular embodiment, communication interface 118 comprises one or more physical I/O controllers (e.g., NICs). These NICs may enable communication between any suitable element of platform logic 110 (e.g., CPUs 112) and another device coupled to network 108 (e.g., elements of other platforms or remote nodes coupled to network 108 through one or more networks). In particular embodiments, communication interface 118 may allow devices external to the platform (e.g., disk drives, other NICs, etc.) to communicate with the CPU cores. In various embodiments, NICs of communication interface 118 may be coupled to the CPUs through I/O controllers (which may be external to or integrated with CPUs 112). Further, as discussed herein, I/O controllers may include a power manager 125 to implement power consumption management functionality at the I/O controller (e.g., by automatically implementing power savings at one or more interfaces of the communication interface 118 (e.g., a PCle interface coupling a NIC to another element of the system), among other example features.

Platform logic 110 may receive and perform any suitable types of processing requests. A processing request may include any request to utilize one or more resources of platform logic 110, such as one or more cores or associated logic. For example, a processing request may comprise a processor core interrupt; a request to instantiate a software component, such as an I/O device driver 124 or virtual machine 132; a request to process a network packet received from a virtual machine 132 or device external to platform 102 (such as a network node coupled to network 108); a request to execute a workload (e.g., process or thread) associated with a virtual machine 132, application running on platform 102, hypervisor 120 or other operating system running on platform 102; or other suitable request.

In various embodiments, processing requests may be associated with guest systems 122. A guest system may comprise a single virtual machine (e.g., virtual machine 132a or 132b) or multiple virtual machines operating together (e.g., a virtual network function (VNF) 134 or a service function chain (SFC) 136). As depicted, various embodiments may include a variety of types of guest systems 122 present on the same platform 102.

A virtual machine 132 may emulate a computer system with its own dedicated hardware. A virtual machine 132 may run a guest operating system on top of the hypervisor 120. The components of platform logic 110 (e.g., CPUs 112, memory 114, chipset 116, and communication interface 118) may be virtualized such that it appears to the guest operating system that the virtual machine 132 has its own dedicated components.

A virtual machine 132 may include a virtualized NIC (vNIC), which is used by the virtual machine as its network interface. A vNIC may be assigned a media access control (MAC) address, thus allowing multiple virtual machines 132 to be individually addressable in a network.

In some embodiments, a virtual machine 132b may be paravirtualized. For example, the virtual machine 132b may include augmented drivers (e.g., drivers that provide higher performance or have higher bandwidth interfaces to underlying resources or capabilities provided by the hypervisor 120). For example, an augmented driver may have a faster interface to underlying virtual switch 138 for higher network performance as compared to default drivers.

VNF 134 may comprise a software implementation of a functional building block with defined interfaces and behavior that can be deployed in a virtualized infrastructure. In particular embodiments, a VNF 134 may include one or more virtual machines 132 that collectively provide specific functionalities (e.g., wide area network (WAN) optimization, virtual private network (VPN) termination, firewall operations, load-balancing operations, security functions, etc.). A VNF 134 running on platform logic 110 may provide the same functionality as traditional network components implemented through dedicated hardware. For example, a VNF 134 may include components to perform any suitable NFV workloads, such as virtualized Evolved Packet Core (vEPC) components, Mobility Management Entities, 3rd Generation Partnership Project (3GPP) control and data plane components, etc.

SFC 136 is a group of VNFs 134 organized as a chain to perform a series of operations, such as network packet processing operations. Service function chaining may provide the ability to define an ordered list of network services (e.g., firewalls, load balancers) that are stitched together in the network to create a service chain.

A hypervisor 120 (also known as a virtual machine monitor) may comprise logic to create and run guest systems 122. The hypervisor 120 may present guest operating systems run by virtual machines with a virtual operating platform (i.e., it appears to the virtual machines that they are running on separate physical nodes when they are actually consolidated onto a single hardware platform) and manage the execution of the guest operating systems by platform logic 110. Services of hypervisor 120 may be provided by virtualizing in software or through hardware assisted resources that require minimal software intervention, or both. Multiple instances of a variety of guest operating systems may be managed by the hypervisor 120. A platform 102 may have a separate instantiation of a hypervisor 120.

Hypervisor 120 may be a native or bare-metal hypervisor that runs directly on platform logic 110 to control the platform logic and manage the guest operating systems. Alternatively, hypervisor 120 may be a hosted hypervisor that runs on a host operating system and abstracts the guest operating systems from the host operating system. Various embodiments may include one or more non-virtualized platforms 102, in which case any suitable characteristics or functions of hypervisor 120 described herein may apply to an operating system of the non-virtualized platform. Further implementations may be supported, such as set forth above, for enhanced I/O virtualization. A host operating system may identify conditions and configurations of a system and determine that features (e.g., SIOV-based virtualization of SR-IOV-based devices) may be enabled or disabled and may utilize corresponding application programming interfaces (APIs) to send and receive information pertaining to such enabling or disabling, among other example features.

Hypervisor 120 may include a virtual switch 138 that may provide virtual switching and/or routing functions to virtual machines of guest systems 122. The virtual switch 138 may comprise a logical switching fabric that couples the vNICs of the virtual machines 132 to each other, thus creating a virtual network through which virtual machines may communicate with each other. Virtual switch 138 may also be coupled to one or more networks (e.g., network 108) via physical NICs of communication interface 118 so as to allow communication between virtual machines 132 and one or more network nodes external to platform 102 (e.g., a virtual machine running on a different platform 102 or a node that is coupled to platform 102 through the Internet or other network). Virtual switch 138 may comprise a software element that is executed using components of platform logic 110. In various embodiments, hypervisor 120 may be in communication with any suitable entity (e.g., a SDN controller) which may cause hypervisor 120 to reconfigure the parameters of virtual switch 138 in response to changing conditions in platform 102 (e.g., the addition or deletion of virtual machines 132 or identification of optimizations that may be made to enhance performance of the platform).

Hypervisor 120 may include any suitable number of I/O device drivers 124. I/O device driver 124 represents one or more software components that allow the hypervisor 120 to communicate with a physical I/O device. In various embodiments, the underlying physical I/O device may be coupled to any of CPUs 112 and may send data to CPUs 112 and receive data from CPUs 112. The underlying I/O device may utilize any suitable communication protocol, such as PCI, PCle, Universal Serial Bus (USB), Serial Attached SCSI (SAS), Serial ATA (SATA), InfiniBand, Fibre Channel, an IEEE 802.3 protocol, an IEEE 802.11 protocol, or other current or future signaling protocol.

The underlying I/O device may include one or more ports operable to communicate with cores of the CPUs 112. In one example, the underlying I/O device is a physical NIC or physical switch. For example, in one embodiment, the underlying I/O device of I/O device driver 124 is a NIC of communication interface 118 having multiple ports (e.g., Ethernet ports). In some implementations, I/O virtualization may be supported within the system and utilize the techniques described in more detail below. I/O devices may support I/O virtualization based on SR-IOV, SIOV, among other example techniques and technologies.

In other embodiments, underlying I/O devices may include any suitable device capable of transferring data to and receiving data from CPUs 112, such as an audio/video (A/V) device controller (e.g., a graphics accelerator or audio controller); a data storage device controller, such as a flash memory device, magnetic storage disk, or optical storage disk controller; a wireless transceiver; a network processor; or a controller for another input device such as a monitor, printer, mouse, keyboard, or scanner; or other suitable device.

In various embodiments, when a processing request is received, the I/O device driver 124 or the underlying I/O device may send an interrupt (such as a message signaled interrupt) to any of the cores of the platform logic 110. For example, the I/O device driver 124 may send an interrupt to a core that is selected to perform an operation (e.g., on behalf of a virtual machine 132 or a process of an application). Before the interrupt is delivered to the core, incoming data (e.g., network packets) destined for the core might be cached at the underlying I/O device and/or an I/O block associated with the CPU 112 of the core. In some embodiments, the I/O device driver 124 may configure the underlying I/O device with instructions regarding where to send interrupts.

In some embodiments, as workloads are distributed among the cores, the hypervisor 120 may steer a greater number of workloads to the higher performing cores than the lower performing cores. In certain instances, cores that are exhibiting problems such as overheating or heavy loads may be given less tasks than other cores or avoided altogether (at least temporarily). Workloads associated with applications, services, containers, and/or virtual machines 132 can be balanced across cores using network load and traffic patterns rather than just CPU and memory utilization metrics.

The elements of platform logic 110 may be coupled together in any suitable manner. For example, a bus may couple any of the components together. A bus may include any known interconnect, such as a multi-drop bus, a mesh interconnect, a ring interconnect, a point-to-point interconnect, a serial interconnect, a parallel bus, a coherent (e.g., cache coherent) bus, a layered protocol architecture, a differential bus, or a Gunning transceiver logic (GTL) bus.

Elements of the data system 100 may be coupled together in any suitable manner such as through one or more networks 108. A network 108 may be any suitable network or combination of one or more networks operating using one or more suitable networking protocols. A network may represent a series of nodes, points, and interconnected communication paths for receiving and transmitting packets of information that propagate through a communication system. For example, a network may include one or more firewalls, routers, switches, security appliances, antivirus servers, or other useful network devices. A network offers communicative interfaces between sources and/or hosts, and may comprise any local area network (LAN), wireless local area network (WLAN), metropolitan area network (MAN), Intranet, Extranet, Internet, wide area network (WAN), virtual private network (VPN), cellular network, or any other appropriate architecture or system that facilitates communications in a network environment. A network can comprise any number of hardware or software elements coupled to (and in communication with) each other through a communications medium. In various embodiments, guest systems 122 may communicate with nodes that are external to the datacenter 100 through network 108.

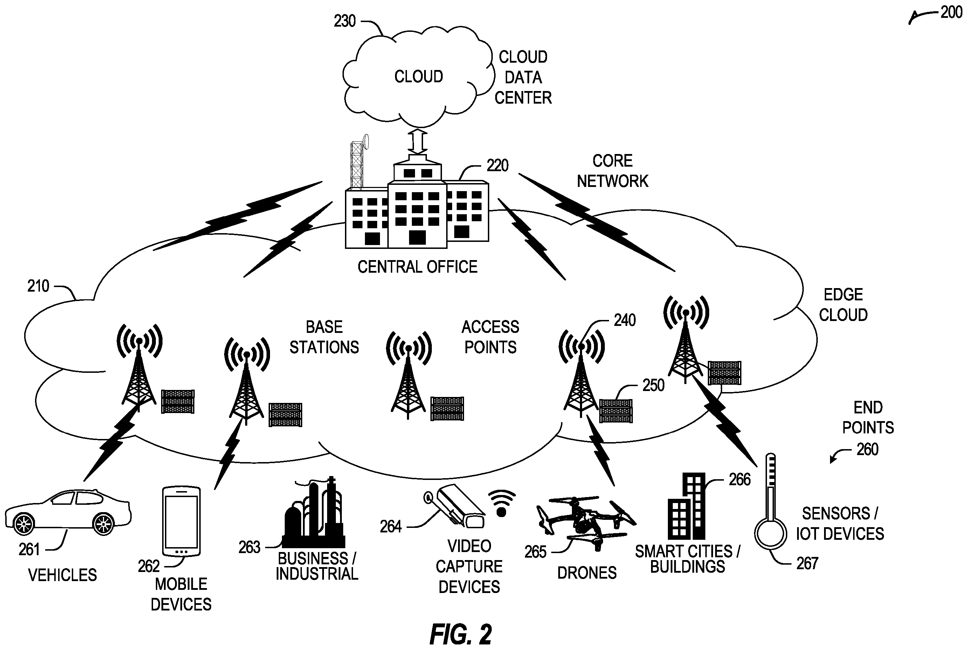

FIG. 2 is a block diagram 200 showing an example computing system, which may implement an loT, edge, or other distributed computing environment and associated communication networks. Access points, such as implemented as base stations 240, in an edge cloud or edge system, a local processing hub 250, or a central office 220. Various data sources 260 (e.g., autonomous vehicles 261, user equipment 262, business and industrial equipment 263, video capture devices 264, drones 265, smart cities and building devices 266, sensors and loT devices 267, etc.) may be provided in the system and may utilize an edge or access layer to access a cloud data center 230. Compute, memory, and storage resources of the various endpoints, edge devices or access points, and the cloud may be leveraged to implement various applications and solutions.

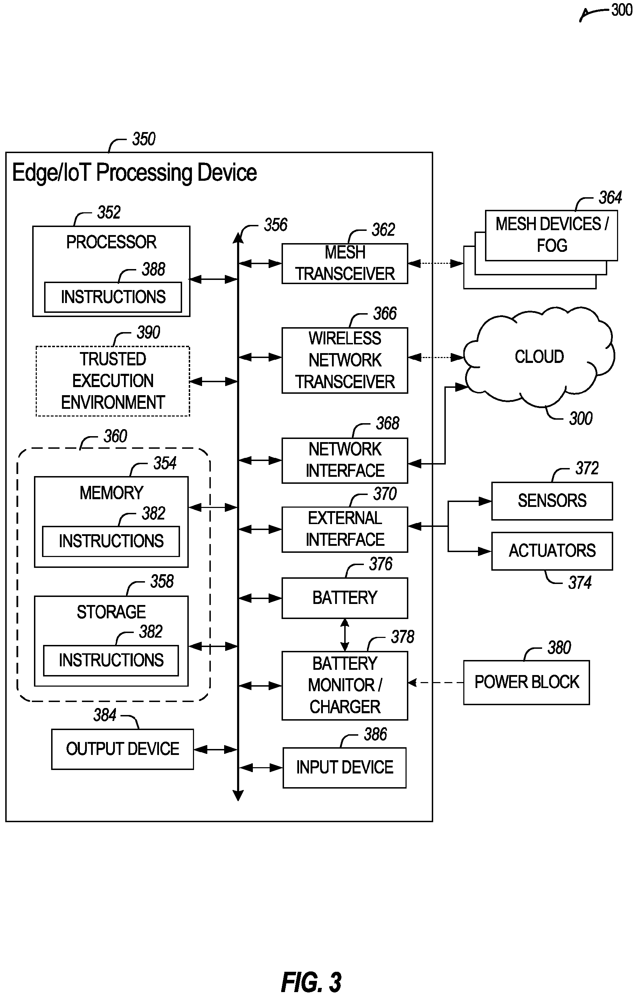

FIG. 3 is a block diagram of an example of components that may be present in an example loT, edge, or endpoint computing device 350, which may include logic for implementing the techniques described herein. For instance, the computing device 350 may include any combinations of the components shown in the example or referenced in the disclosure above. The components may be implemented as ICs, intellectual property blocks, portions thereof, discrete electronic devices, or other modules, logic, hardware, software, firmware, or a combination thereof adapted in the computing device 450, or as components otherwise incorporated within a chassis of a larger system. Additionally, the block diagram of FIG. 3 is intended to depict a high-level view of components of the computing device 350. However, some of the components shown may be omitted, additional components may be present, and different arrangement of the components shown may occur in other implementations.

The computing device 350 may include processor circuitry in the form of, for example, a processor 352, which may be a microprocessor, a multi-core processor, a multithreaded processor, an ultra-low voltage processor, an embedded processor, or other known processing elements. The processor 352 may be a part of a system on a chip (SoC) in which the processor 352 and other components are formed into a single integrated circuit, or a single package. The processor 352 may communicate with a system memory 354 over an interconnect 356 (e.g., a bus). Any number of memory devices may be used to provide a given amount of system memory. To provide for persistent storage of information such as data, applications, operating systems and so forth, a storage 358 may also couple to the processor 352 via the interconnect 356. In an example the storage 358 may be implemented via a solid state disk drive (SSDD). Other devices that may be used for the storage 358 include flash memory cards, such as SD cards, microSD cards, xD picture cards, and the like, and USB flash drives. In low power implementations, the storage 358 may be on-die memory or registers associated with the processor 352. However, in some examples, the storage 358 may be implemented using a micro hard disk drive (HDD). Further, any number of new technologies may be used for the storage 358 in addition to, or instead of, the technologies described, such resistance change memories, phase change memories, holographic memories, or chemical memories, among others.

The components may communicate over the interconnect 356. The interconnect 356 may include any number of technologies, including PCI express (PCIe), Compute Express Link (CXL), NVLink, HyperTransport, or any number of other technologies. The interconnect 356 may be a proprietary bus, for example, used in a SoC based system. Other bus systems may be included, such as an I2C interface, an SPI interface, point to point interfaces, and a power bus, among others.

Given the variety of types of applicable communications from the device to another component or network, applicable communications circuitry used by the device may include or be embodied by any one or more of components 362, 366, 368, or 370. Accordingly, in various examples, applicable means for communicating (e.g., receiving, transmitting, etc.) may be embodied by such communications circuitry. For instance, the interconnect 356 may couple the processor 352 to a mesh transceiver 362, for communications with other mesh devices 364. The mesh transceiver 362 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. The mesh transceiver 362 may communicate using multiple standards or radios for communications at different ranges.

A wireless network transceiver 366 may be included to communicate with devices or services in the cloud 300 via local or wide area network protocols. For instance, the edge device 350 may communicate over a wide area using LoRaWAN^{™} (Long Range Wide Area Network), among other example technologies. Indeed, any number of other radio communications and protocols may be used in addition to the systems mentioned for the mesh transceiver 362 and wireless network transceiver 366, as described herein. For example, the radio transceivers 362 and 366 may include an LTE or other cellular transceiver that uses spread spectrum (SPA/SAS) communications for implementing high speed communications. Further, any number of other protocols may be used, such as Wi-Fi^{®} networks for medium speed communications and provision of network communications. A network interface controller (NIC) 368 may be included to provide a wired communication to the cloud 400 or to other devices, such as the mesh devices 364. The wired communication may provide an Ethernet connection, or may be based on other types of networks, protocols, and technologies.

The interconnect 356 may couple the processor 352 to an external interface 370 that is used to connect external devices or subsystems. The external devices may include sensors 372, such as accelerometers, level sensors, flow sensors, optical light sensors, camera sensors, temperature sensors, a global positioning system (GPS) sensor, pressure sensors, barometric pressure sensors, and the like. The external interface 370 further may be used to connect the edge device 350 to actuators 374, such as power switches, valve actuators, an audible sound generator, a visual warning device, and the like.

In some optional examples, various input/output (I/O) devices may be present within, or connected to, the edge device 350. Further, some edge computing devices may be battery powered and include one or more batteries (e.g., 376) to power the device. In such instances, a battery monitor / charger 378 may be included in the edge device 350 to track the state of charge (SoCh) of the battery 376. The battery monitor / charger 378 may be used to monitor other parameters of the battery 376 to provide failure predictions, such as the state of health (SoH) and the state of function (SoF) of the battery 376, which may trigger an edge system to attempt to provision other hardware (e.g., in the edge cloud or a nearby cloud system) to supplement or replace a device whose power is failing, among other example uses. In some instances, the device 350 may also or instead include a power block 380, or other power supply coupled to a grid, may be coupled with the battery monitor / charger 378 to charge the battery 376. In some examples, the power block 380 may be replaced with a wireless power receiver to obtain the power wirelessly, for example, through a loop antenna in the edge device 350, among other examples.

The storage 358 may include instructions 382 in the form of software, firmware, or hardware commands to implement the workflows, services, microservices, or applications to be carried out in transactions of an edge system, including techniques described herein. Although such instructions 382 are shown as code blocks included in the memory 354 and the storage 358, it may be understood that any of the code blocks may be replaced with hardwired circuits, for example, built into an application specific integrated circuit (ASIC). In some implementations, hardware of the edge computing device 350 (separately, or in combination with the instructions 388) may configure execution or operation of a trusted execution environment (TEE) 390. In an example, the TEE 390 operates as a protected area accessible to the processor 352 for secure execution of instructions and secure access to data, among other example features.

Some elements within a data center environment, an loT environment, or autonomous industrial or transportation environment (among other examples, may be particularly latency sensitive. For instance, an autonomous vehicle or robot may need to process large amounts of environment information in near-real time (e.g., as observed by a human riding in the vehicle or interacting with the drone or robot) in order to operate accurately and safely. Other workloads, such as handled in a datacenter, loT, or edge computing environment may also demand that certain specialized processing capabilities (e.g., of a specialized processor (e.g., a graphics processing unit (GPU), tensor processing unit (TPU), smart networking elements (e.g., an infrastructure processing unit (IPU), a precision time accelerator (e.g., implementing a Precision Time Protocol or other time-precise controller), machine learning accelerator, or other hardware accelerator device) may be leveraged to process data with low latency tolerances (e.g., based on the purpose or demands of the application (e.g., controlling autonomous interactions with the physical world, media processing, etc.), a service level agreement, or other example aspects of a workload.

To assist in meeting more aggressive latency demands, some systems utilize Time Sensitive Network (TSN) protocols and principles, among other enhanced low latency networking features, to assist in delivering data associated with time-sensitive workloads to general processing and accelerator devices. Indeed, with the advent of TSN standards, automotive applications are increasingly integrating TSN-capable Ethernet controllers. Time sensitive networking provides precise scheduling of data and scalability while reducing the wiring weight and cost. For example, in autonomous driving applications, high bandwidth, high resolution camera data is transmitted over a base-T1 Ethernet network before it is processed by a GPU (or other processing device). In the case of the automotive applications, GPUs are typically used for real-time object detection and identification, sensor fusion, and image processing. Hence, high bandwidth memory (HBM) is often used in conjunction with graphics accelerators for these applications.

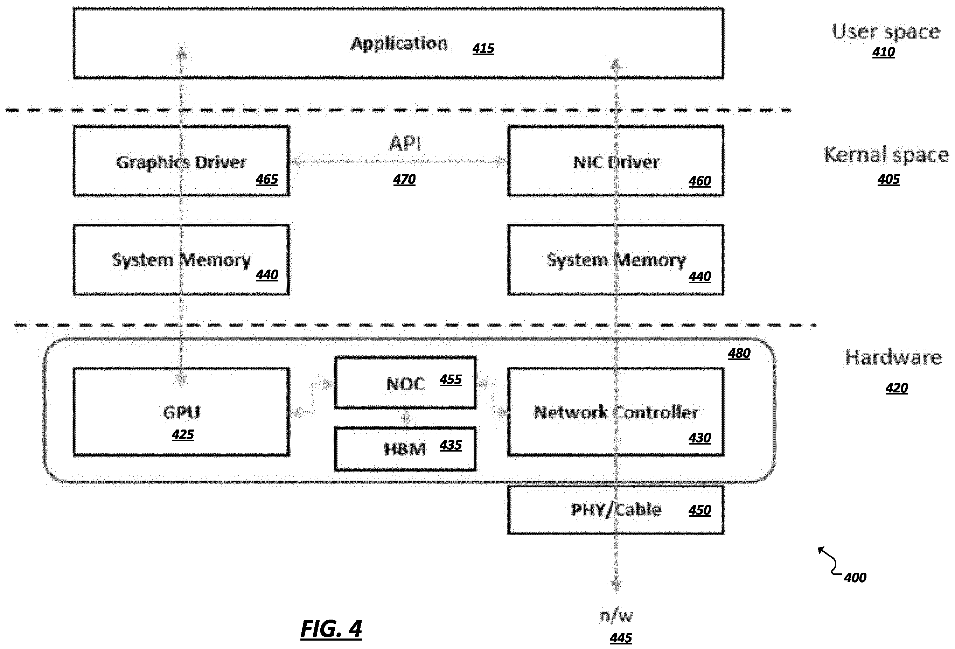

Turning to the simplified block diagram 400 of FIG. 4, an example computing platform is illustrated including a host system through which kernel space 405 and user space 410 are provided to execute one or more applications (e.g., 415). An application may include an application utilized to implement computer vision, autonomous decision making, automation, among other features, which may include low-latency demands. Accelerator hardware 420 may also be provided, which includes a specialized processor 425 (e.g., a GPU) and network controller hardware 430. The application 415, for instance, may leverage the specialized processor to perform certain functions and/or accelerate at least a portion of the associated jobs or workload of the application, among other examples. While many of the examples shown and described herein may name a "GPU" as the example specialized processor device 425, this is done for convenience and readability only. It should be appreciated that the same principles and solutions discussed herein may equally apply to other specialized processor devices, such as TPUs, programmable processor devices (e.g., field programmable gate array (FPGA) devices, machine learning accelerators, and other hardware accelerators.

In some implementations, HBM 435 may be provided to store data for use by a specialized processor device 425. For instance, to achieve high-performance compute, the specialized processor device 425 may consume data residing in the HBM 435 which the specialized processor device (e.g., a GPU) may access via a high bandwidth memory bus. Hence, a low latency path to HBM may be critical to realizing the performance objectives of an associated application 415. In typical systems, moving data to HBM includes first copying the data to system memory 440 (e.g., DDR memory). However, access to DDR may be relatively very slow (e.g., on the order of several microseconds) and is bandwidth-limited. Using system memory can also involve the copying of data between the GPU memory stack and network interface controller (NIC) memory stack(s). For example, camera images that are coming over a network (e.g., 445) may be accessed (e.g., through direct memory access (DMA)) to main DDR memory by the NIC hardware first. This data may then be copied from NIC kernel space to user space by the network driver. Then the user application also copies this data from NIC user space to GPU user space, allowing the graphics driver to then pick this data and copy it over to GPU driver space, which will finally be read by the GPU. Additionally, a reverse sequence of these operations occurs when data is transmitted over the network (e.g., over a physical layer 450 (e.g., a cable)). Due to several memory copies, the resulting end-to-end latency in traditional implementations is on the order of several hundreds of microseconds or even in milliseconds, which may not be suitable for low latency real-time applications.

In some implementations, an improved architecture may be provided, which includes a NIC device with logic (e.g., implemented in hardware and/or firmware) to determine, for a packet, that the packet should be accessed directly from or written directly to HBM without first writing data to or copying data from system memory (e.g., DDR) so as to facilitate a low latency packet exchange with a specialized processing device associated with and connected to the HBM (e.g., via a high-speed memory bus). For instance, the NIC device may determine from information in a corresponding packet descriptor that the packet is to be read from or written to (e.g., via a DMA operation) HBM by the NIC. In other instances, two (or more) descriptor queues may be provided (e.g., two TX queues and two RX queues), with one queue designated for packets that are to be transmitted or received directly to/by HBM by the NIC. In still other implementations, the NIC may alternatively or additionally include logic to inspect packets and may determine from the inspection that the packets are to be written directly to the HBM (instead of DDR). In some implementations, a corresponding NIC driver may receive hints (e.g., from a driver associated with the specialized processing device) and may DMA the associated HBM (instead of using DDR to move packets) based on the hint, among other example implementations.

In one example, a NIC may be equipped with programmable smart filter logic to instantiate one or more filters for data arriving on a network. In one example, the NIC may utilize smart filter logic to identify attributes of received data and determine a priority, traffic class, source of the data, a host application associated with the received data (e.g., based on a virtual LAN associated with the application and the received data), among other example features. For instance, a header of a received packet may include data such as source identifier, source address, VLAN tag, and other information, which may be utilized by the NIC to determine attributes of the data. In one example, the NIC may utilize the detected attributes of received data to further determine whether to apply a direct-to-HBM (without first forwarding or copying to the host or system memory) data path to the received data, among other example implementations.

Returning to the example of FIG. 4, a device 480 may be provided, which includes a NIC, an HBM, and a specialized processor device, which is to operate on a data in in the HBM. An interconnect fabric 455 (e.g., a network on chip (NOC)) may be provided to couple both the NIC 430 and the specialized processor 425 to the HBM 435. In some implementations, by default, data received on a network 445 at the NIC 430 is copied to system memory 440 (e.g., or other memory on a host system), for instance, through a DMA write to the system memory 440. A driver 460 of the NIC may interface with an application 415 and the application 415, in connection with its execution, may make use of one or more specialized processors (e.g., via a driver 465 of the specialized processor device) to perform (e.g., in an accelerated manner) various operations in connection with the application 415. In some instances, a specialized processor device may access data that it is to operate upon from the system memory 440. In other cases, in order to effectively perform its operations or functions, the specialized processor (e.g., 425) is to utilize an HBM device 435. In such instances, data may be first moved from the system memory 440 to the HBM 435, before the data from the network 445 is made available to the specialized processor (e.g., 425), resulting in effectively a superfluous copy of the data to system memory 440. In cases, where data generated or modified by the specialize processor device (e.g., 425) is to be sent over the network 445 using the NIC 480, a similar default process may be utilized, where the data is copied to the system memory 440 by the specialized processor 425 and then accessed by the NIC 430 to send on the network 445.

In an improved implementation, the architecture may allow the NIC 430 selectively send or receive data to/from the specialized processor device 425 through direct (e.g., DMA) writes/reads to the HBM 435 used by the specialized processor 425 without copying the data to the system memory 440. The NIC 430 may determine whether a default path is used (e.g., through copies to the system memory 440) or alternatively whether a direct transaction with the HBM 435 is to be used (e.g., utilizing NOC 455 and skipping a path that includes writes to system memory 440). A default path (e.g., by virtue of the involvement of the host system) may include various enhancements, which may be omitted in a direct-to-HBM path, such as packet preemption, ingress pipeline processing, packet coalescing, interrupt moderation, and DMA bundling among other examples. Such enhancement may provide benefits in certain applications, but may contribute additional latency to the data pipeline, among other example issues.

In some implementations, an improved architecture utilizes DMAs to access the data directly to/from HBM 435 instead of to/from main DDR memory and thus reduce an unneeded memory copy (to DDR). This modification may reduce the packet latencies significantly (e.g., to sub-microseconds). In one example, to achieve this, the descriptors (e.g., transmit (Tx) and receive (Rx) descriptors) used by the NIC 430 may be modified to include the addition of a new field to indicate whether the corresponding data is to be copied to DDR (e.g., over a default path) or diverted from this default path to be "DMAed" to HBM 435. In one example, the field may include a bit designated as "hbm_mode" to distinguish between the default DDR path and the alternate, low latency HBM path. In such an example, logic within the NIC 430 (e.g., a NIC DMA engine) may decode the descriptors to determine whether to end-run the default path and, if so, send an "HBM mode" signal to the NIC's internal fabric router to designate the data (e.g., packets) as "HBM mode." If the packet is designated a HBM mode, the packet will be routed by the NIC 430 to NOC fabric 455 coupling the NIC 430 to the HBM (e.g., instead of IOSF fabric coupling the NIC to the system memory (DDR) 440. Additionally, the NIC may participate and support an address-based transaction routing scheme within the NIC's internal fabric to route packets either to DDR (e.g., 440) or HBM (e.g., 435).

Continuing with the proceeding example, in cases where the NIC using direct reads/writes to HBM, rather than utilizing the kernel and system memory to copy data for use by the specialized processor, the location and even existence of the data moved to or from HBM may be unclear or invisible to the kernel and the application. For instance, while the NIC driver 460 runs on the host CPU (e.g., in kernel space 405) and the descriptors are still formed and located in the main memory of the host (e.g., DDR system memory), because the data (e.g., packet) payload is stored and moved between the specialized processor 425 and the NIC 430 using the HBM 435, the HBM 435 is typically not visible to the host CPU. To resolve this, additional logic may be provided at the driver 460 of the NIC and or the driver 465 of the specialized processor device 425 (e.g., a graphic driver for a GPU). For instance, the NIC driver 460 may manage queues provisioned for the NIC 430 (e.g., provisioning one queue for normal traffic that is to use traditional copies to and from system memory and another queue for low-latency traffic that is to be moved directly between the NIC and HBM) and dictate which data (e.g., through defined conditions or rules) is to be managed using the standard queue and which data is to be managed using the low-latency queue. Additionally, driver 465 and NIC driver 460 may include logic to support an interface (e.g., an application programming interface 470 (an API)) that enables and facilitates inter driver communication between drivers 460 and 465. The drivers 460 and 465 may utilize this interface 470 to communicate with each other and convey the location(s) of the data payload in HBM 435.

Through strategic use of direct HBM transfers between the NIC 430 and a specialized processor device 425 associated with the HBM, significant latency gains may be realized, which may have particular benefit in applications demanding high service level standard or latency requirements. For instance, in a traditional computer vision application, a NIC may write large amounts of received images into host system DDR using DMA. Similarly, for transmit, the NIC fetches data from the DDR system memory utilizing similar flows. Similar operation happens on the GPU side as it receives the data received by the NIC from DDR and writes data to DDR for the NIC to copy and ultimately send out on a network. However, this, and similar data flows involve several memory copies as data traverses from hardware (e.g., 425, 430) to kernel space 405 to user space 410 and vice versa on both sides of GPU and NIC, thereby incurring large latencies. Indeed, the latencies can even grow larger in systems where each memory read/write transaction traverses a PCle or other defined interconnect protocol interface (e.g., and multiple corresponding OSI layers) which adds additional latency, among other examples.

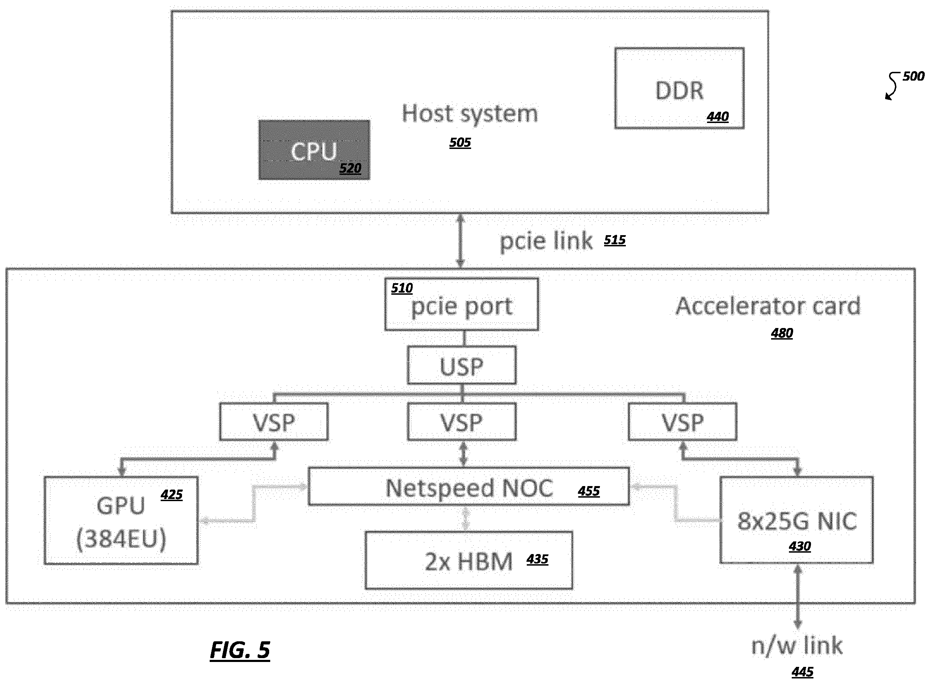

Turning to the block diagram 500 of FIG. 5, in one example implementation, a NIC 430 and a specialized processing device 425 (in this example a GPU 425), may be provided on the same accelerator die, package, or card 480. Also included in the accelerator device 480 is HBM for use by the GPU 425 and a network on chip fabric 455 to facilitate communication of data between the GPU 425, NIC, 430, HBM 435, and a PCIe port 510 (or a port supporting one or more other interconnect protocols) used to couple the accelerator device 480 to a host system 505 via a link 515. In one example, the accelerator device 480 may be implemented as an application-specific or purpose-built accelerator for low-latency applications, such as an autonomous driving accelerator, robotics accelerator, machine learning accelerator, among other examples.

The host system 505 may include a host processor such as a CPU 520 (including one or more multiple processor cores) and system memory implemented, at least in part, through DDR memory 440. The host system 505 may execute various applications (using CPU 520 and DDR 440). In some cases, the host system 505 may be included within a data center, cloud computing, or other distributed computing environment and may execute applications, services, microservices, virtual machines, etc. for various tenants. In some cases, applications or other programs may call upon the use of a specialized processing device (e.g., 425) to perform various tasks, such as graphics processing, machine learning, networking, or other tasks. The accelerator device 480 may provide such accelerated functionality to one or more multiple host systems in some implementations. An operating system hypervisor, kernel, etc. may be implemented and executed on the host system, including drivers for the GPU 425 and NIC 430. The NIC may couple to a network 445 and communicate data on the network for the host system and/or specialized processing device. In some implementations, the NIC 430 may enable high-speed base-T1 networking on behalf of the system.

As introduced above, a NIC 430 and its driver may be enhanced to enable the selective redirection of a data path that is, by default, to pass data from the NIC 430 to other components (including GPU 425) through copies to DDR memory 400 on the host system 505. The NIC 430 may include logic (e.g., implemented in hardware and/or software) to determine when data in a packet should be written (or read) directly from HBM 435 (using NOC 455) instead of the default data path. As an example, GPU 425 may be used to process high resolution video data (e.g., in connection with a computer vision or autonomous vehicle or robotics application). Such video may be received at the NIC 430 from various sources (e.g., multiple different cameras) for processing by the GPU. In one example, an application may require low latency processing of this video data and the frames (e.g., an indicator in the data itself), packets (e.g., through a field included in the header wrapping the video data), or a descriptor for the packet may indicate to the NIC 430 that it is redirect this data through the HBM directly. The NIC and GPU may utilize their respective drivers to facilitate the communication of this "end run" of the standard data path to the application, as well as coordinate between the NIC and GPU where to find the data that has been DMA-written to the HBM to assist in achieving the low-latency goals of the application, among other examples.

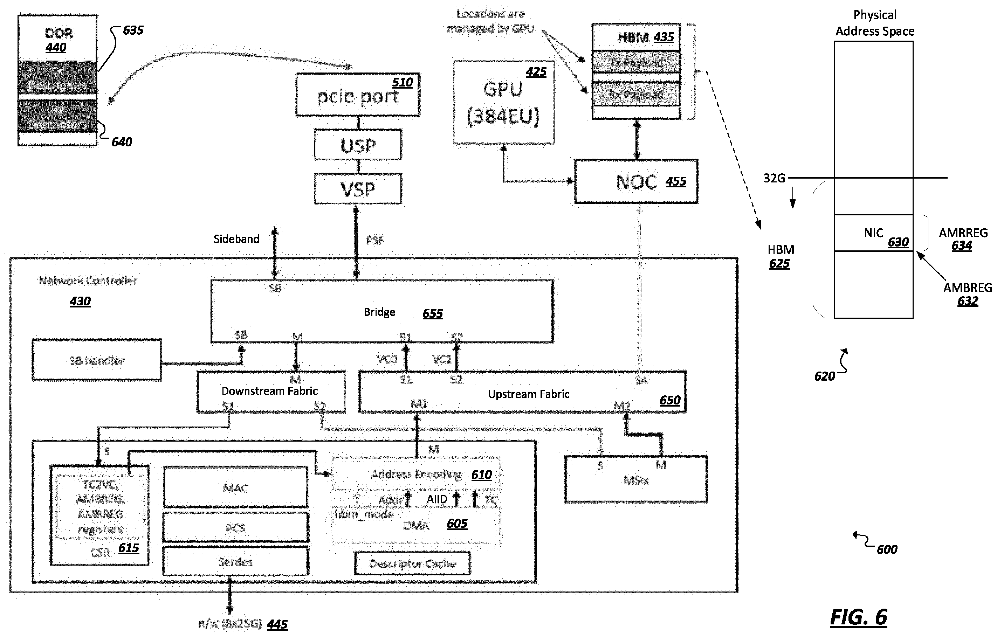

Turning to FIG. 6, a simplified block diagram 600 is shown illustrating an example NIC 430 enhanced with logic to support the dynamic redirection of certain data directly to HBM 435, as opposed to a default or standard data path through DDR 440 of a host system. A DMA block 605 may be provided with logic to signal an address encoding block 610 to cause the address encoding block 610 to encode an address of the data to facilitate routing of the data (using upstream fabric block 650) to either the DDR system memory 440 or HBM 435. Registers (e.g., 615) may be utilized to dictate which ranges of addresses are to be applied in the encoding. Indeed, addresses may be selected to indicate that a direct-to-HBM data path is to be used. For data to be sent over the standard data path, the data may be sent over bridge circuitry 655 (e.g., an IOSF bridge) and over a PCIe port 510 to the DDR 440. In the case of data to be written to HBR, the data may be instead routed to a high bandwidth NOC device 455 to cause the data to be written to a portion of HBM reserved for DMA write (and/or reads) by the NIC 430.

As illustrated in the example of FIG. 6, the system may adopt an addressing scheme or mapping (e.g., 620), where a portion 625 of the physical address space is designated for HBM memory addressing. The specialized processing unit 425 may utilize various ranges or blocks of memory within this address space. To avoid conflicting use of the HBM, a portion 630 of the HBM may be reserved or designated for use by the NIC 430 for DMA access (e.g., reads and/or writes) to the HBM. The reserved portion 630 may be designated by base 632 and range register 634 values, which may be maintained in a configuration status register 615 of the NIC 430. Transmit descriptors 635 and receive descriptors 640 may be utilized by the NIC (e.g., and stored in DDR 440) to point to specific blocks of HBM where data is to be written by the NIC or retrieved by the NIC.

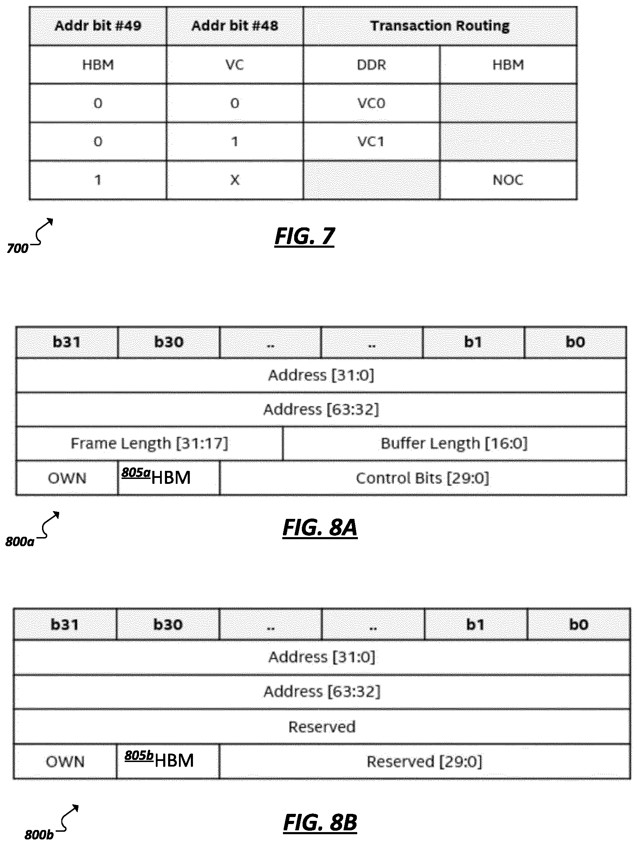

Turning to FIG. 7, a diagram 700 is shown illustrating an example scheme for performing address-based routing at an example enhanced NIC to selectively route packets from the NIC to either DDR or directly to HBM associated with a specialized processing device. As shown in the example of FIG. 7, an address encoder of the NIC may add internal routing bits to an address identified in a descriptor, such as an address bit (e.g., 705) to indicate whether the data is to be routed by the NIC to the DDR or to HBM. Additional bits may be provided, for instance, to indicate virtual channels to apply to the data (e.g., in the event the data is to be routed to the DDR. These bits may be stripped off after routing of the data has been resolved by the NIC and before it is routed onto the PCle port or NOC, among other examples.

In one example implementation, transmit and receive descriptors used by the NIC to identify locations in memory to write or retrieve data received or to be sent on the network by the NIC may be modified to indicate whether the data is to be copied to/from HBM memory (e.g., rather than system memory). For instance, a "hbm_mode" bit may be provided in the descriptors to indicate whether the standard data path is to be followed (e.g., as designated by a "0" value) or the alternate low-latency HBM DMA path is to be followed (e.g., as designated by a "1" value). FIGS. 8A-8B are diagrams 800a-b illustrating examples of a modified transmit descriptors 800a and modified receive descriptors 800b.

As noted above, in some solutions utilizing an enhanced NIC (and NIC driver), to achieve low packet latencies, NIC descriptors may be modified to cause packets to be routed to HBM memory via NOC fabric instead of main DDR memory via IOSF fabric. In some implementations, an address-based routing scheme may be utilized to correctly route packets from the NIC. Additionally, an interface (e.g., an API) may be defined to facilitate inter driver communication between the respective drivers of the NIC and the specialized processing device associated with and coupled to HBM. For instance, the interface may be used to communicate (between the drivers of the NIC and specialized processing device) the data locations in the HBM that are to be used. Such an arrangements may allow the specialized processing device to process the data directly from HBM, hence considerably reducing the latencies and improving the overall performance (e.g., which may be critical in latency-sensitive operations, such as in autonomous driving applications or other applications where object detection and identification, sensor fusion, and image processing must be done in real-time), among other examples.

In one example, when a driver (e.g., the NIC driver) forms the transmit descriptor ring and receive descriptor ring, it can set the various fields of the descriptors, including hbm_mode bits 805a, 805b, based on whether the data is intended for the specialized processor device associated with the HBM and/or whether the data is intended for use in association with a latency sensitive task or application, among other example considerations or policies. If such conditions are not met, the "hbm_mode" bit may be set to zero causing the data to be allocated to the standard or default data path (e.g., over DDR of the host system). In one example, the driver of the specialized processor (e.g., a GPU) may allocate transmit buffers and receive buffers in the HBM and send the address locations to the NIC driver. The NIC driver may create a transfer ring buffer (TRB) and receive ring buffer (RRB) in the host memory (DDR) with descriptors pointing to available buffer locations allocated by the GPU driver.

Continuing with the preceding example, in some instances, when the tail pointer is advanced by the NIC driver, the NIC hardware may fetch descriptors and store them in its local cache. In the case of a receive, upon receiving a packet, the DMA engine of the NIC may parse the available descriptor and get the address location where the data should be written. If the "hbm_mode" bit (e.g., 805a,b) is set in that descriptor, then the DMA engine asserts "hbm_mode" signal to the internal fabric when making a write transaction. Based on the hbm_mode signal, address mapping and TC to VC mapping configuration, the internal fabric of the NIC may route the packet to DDR (for VC0 and VC1) over the IOSF bridge or to HBM over the NOC. Upon writing the data into HBM memory, the NIC may generate an interrupt (e.g., an MSI/MSIx interrupt) to the host CPU indicating availability of data. It may also clear the "OWN" bit in the corresponding descriptor indicating that the software can now own this descriptor (e.g., for use in a subsequent transaction). For the data packets that are written into DDR, MSI/MSIx messages may be utilized and be sufficient. However, for data packets that are determined to be written into HBM, the NIC driver may send a command to the GPU driver over an interface to indicate to the GPU driver that data is available for reading from the HBM (e.g., including the address of the data within the HBM). The GPU may then read the data directly from the HBM.

A similar sequence of operations may be followed in transmit operations (e.g., where the NIC receives data from the GPU to be sent onto the network. For instance, the driver of the specialized processing device may communicate the address locations in HBM of data to be transmitted to the driver of the NIC. The NIC driver may build corresponding transmit descriptors (e.g., in DDR) with buffer addresses pointing to the HBM locations designated by the specialized processing device's driver and cause that the "hbm_mode" bit 805a is set (and advance the tail pointer). After the tail pointer is advanced, the NIC DMA engine may fetch these descriptors and parse them. If the "hbm_mode" bit 805a is set, then the NIC DMA engine asserts "hbm_mode" signal to the internal fabric of the NIC along with an upstream read request. The NIC fabric may then route the transaction to a NOC and receive the corresponding data completion from the HBM, among other example implementations.

In the case of receive buffers and receive descriptors, a number of receive descriptors may be pre-generated (e.g., by the NIC driver and/or GPU driver) with hbm_mode bits set. The NIC may be directed by the NIC driver (e.g., based on direction of one or more applications running on the host system) to assign a select subset of packets received at the NIC on the network to these receive descriptors with hbm_mode bits set. For instance, smart filters of the NIC or other logic may be configured (e.g., using the NIC driver) to map any packet received from a particular source (e.g., a camera device associated with a time-sensitive application (e.g., autonomous movement, computer vision, etc.) or on a particular VLAN (e.g., associated with an application that is to use the specialized processor device to perform time-sensitive operations) to one of the receive descriptors with hbm_mode bits set. In some implementations, simply by virtue of being assigned to a receive descriptors with hbm_mode bits set, the corresponding data may be written directly to HBM for consumption by the specialized processor device. In other instances, being assigned to a receive descriptors with hbm_mode bits set may be a necessary, but not sufficient condition for using direct-to-HBM routing. For instance, NIC filters may determine other attributes of the corresponding packet, such as traffic class for the packet (e.g., determined from a Priority Code Point (PCP) field in a frame's 802.1Q header, among other example fields and information in the packet) and when the received data is both mapped to a receive descriptors with hbm_mode bits set and meets other conditions (e.g., assignment to a particular traffic class by a smart filter of the NIC) the data may be copied to HBM using direct-to-HBM routing, among other example implementations.

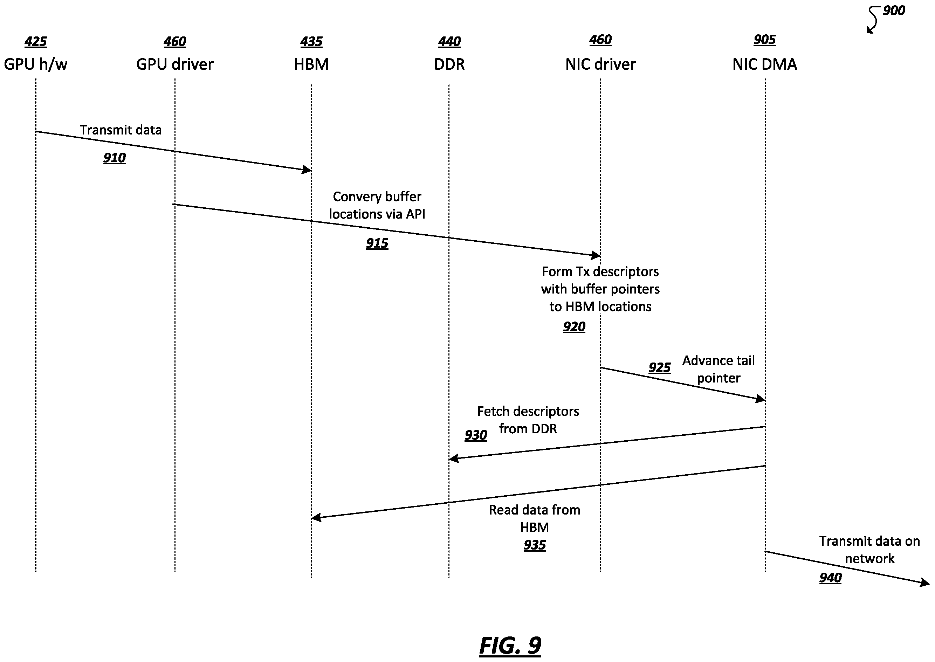

FIG. 9 is a flow diagram 900 illustrating an example transmit data flow. A GPU 425 (or other specialized processing device) may transmit 910 data to the HBM and a driver 460 of the GPU may convey 915 buffer locations (e.g., addresses in the HBM where the data was written by the GPU) to a driver 460 of a NIC, which, in some implementations, is implemented on the same device (e.g., die, card, etc.) as the GPU 425. The NIC driver 460 may utilize this information to form 920 transmit (Tx) descriptors (e.g., in a descriptor ring implemented in system memory). In some implementations, the Tx descriptor may be enhanced with one or more fields (e.g., an hbm_mode bit) to indicate to the NIC driver that the data is to be access directly from the HBM, rather than from DDR, which may normally be expected (e.g., representing a standard or default data path in conveying data between the GPU 425 and NIC). In other implementations, the Tx descriptors in an HBM mode may be held in a buffer corresponding to the HBM mode (e.g., and separate from a buffer used to hold descriptors intended to use the standard or default data path). A DMA block 905 of the NIC may fetch the descriptors (e.g., from DDR) corresponding to the data written to the HBM by the GPU 425 (e.g., at 910) and use the descriptors to identify the location, in HBM, of the buffers and read 935 the contents of the buffer. The payload data within the buffer read or copied by the NIC from HBM may then be packaged (e.g., in accordance with one or more bus or network protocols) for transmission 940 of the data on a network.

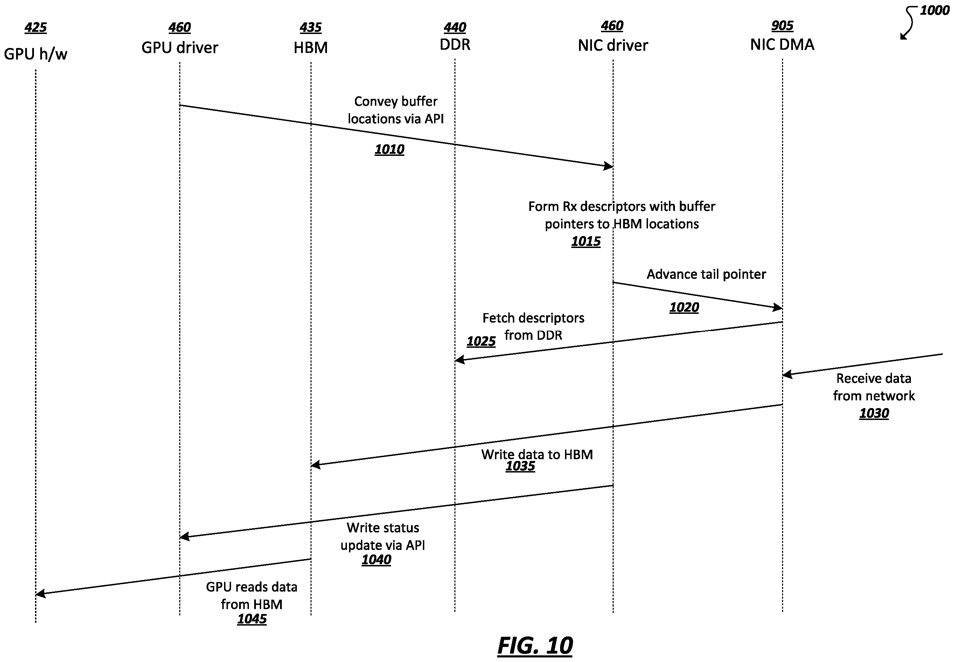

Turning to FIG. 10, a flow diagram 1000 is shown illustrating an example receive data flow. In this example, a driver 460 of a specialized processing device 425 (e.g., a GPU) may prepare buffer locations within an HBM associated with the specialized processing device 425 for use by a NIC (e.g., included on the same device as the specialized processing device). The buffer locations may be communicated 1010 to a driver 460 of the NIC (e.g., over an API) and the NIC driver 460 may utilize this information to construct corresponding receive descriptors to point to the HBM buffer locations. The NIC driver 460 may advance a tail pointer within a ring buffer used to manage the receive descriptors and a DMA block 905 of the NIC may fetch one or more of the descriptors from DDR of a host system coupled to the NIC and specialized processing device. Data may be received 1030 at the NIC from a network and the NIC may determine that descriptors associated with a low-latency data path (and DMA write to HBM, instead of DDR 440) should be used for the data. Accordingly, the NIC DMA block or engine 905 may DMA write the data to corresponding address(es) in HBM 435. The NIC driver 460 may message 1040 the GPU Driver 460 that this data has been written to HBM for consumption by the GPU 425. Such messaging may identify the write, together with the address(es) in HBM to which the data was written by the NIC. The GPU may then read 1045 this data from HBM and consume the data, without involving copies of the data to DDR, among other example features and implementations.

"Logic," as used herein, may refer to hardware, firmware, software and/or combinations of each to perform one or more functions. In various embodiments, logic may include a microprocessor or other processing element operable to execute software instructions, discrete logic such as an application specific integrated circuit (ASIC), a programmed logic device such as a field programmable gate array (FPGA), a memory device containing instructions, combinations of logic devices (e.g., as would be found on a printed circuit board), or other suitable hardware and/or software. Logic may include one or more gates or other circuit components. In some embodiments, logic may also be fully embodied as software.

A design may go through various stages, from creation to simulation to fabrication. Data representing a design may represent the design in a number of manners. First, as is useful in simulations, the hardware may be represented using a hardware description language (HDL) or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In some implementations, such data may be stored in a database file format such as Graphic Data System II (GDS II), Open Artwork System Interchange Standard (OASIS), or similar format.

In some implementations, software-based hardware models, HDL, and other functional description language objects can include register transfer language (RTL) files, among other examples. Such objects can be machine-parsable such that a design tool can accept the HDL object (or model), parse the HDL object for attributes of the described hardware, and determine a physical circuit and/or on-chip layout from the object. The output of the design tool can be used to manufacture the physical device. For instance, a design tool can determine configurations of various hardware and/or firmware elements from the HDL object, such as bus widths, registers (including sizes and types), memory blocks, physical link paths, fabric topologies, among other attributes that would be implemented in order to realize the system modeled in the HDL object. Design tools can include tools for determining the topology and fabric configurations of system on chip (SoC) and other hardware devices. In some instances, the HDL object can be used as the basis for developing models and design files that can be used by manufacturing equipment to manufacture the described hardware. Indeed, an HDL object itself can be provided as an input to manufacturing system software to cause the described hardware.

In any representation of the design, the data may be stored in any form of a machine readable medium. A memory or a magnetic or optical storage such as a disc may be the machine-readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of embodiments of the present disclosure.

A module as used herein refers to any combination of hardware, software, and/or firmware. As an example, a module includes hardware, such as a micro-controller, associated with a non-transitory medium to store code adapted to be executed by the micro-controller. Therefore, reference to a module, in one embodiment, refers to the hardware, which is specifically configured to recognize and/or execute the code to be held on a non-transitory medium. Furthermore, in another embodiment, use of a module refers to the non-transitory medium including the code, which is specifically adapted to be executed by the microcontroller to perform predetermined operations. And as can be inferred, in yet another embodiment, the term module (in this example) may refer to the combination of the microcontroller and the non-transitory medium. Often module boundaries that are illustrated as separate commonly vary and potentially overlap. For example, a first and a second module may share hardware, software, firmware, or a combination thereof, while potentially retaining some independent hardware, software, or firmware. In one embodiment, use of the term logic includes hardware, such as transistors, registers, or other hardware, such as programmable logic devices.

Use of the phrase 'to' or 'configured to,' in one embodiment, refers to arranging, putting together, manufacturing, offering to sell, importing and/or designing an apparatus, hardware, logic, or element to perform a designated or determined task. In this example, an apparatus or element thereof that is not operating is still 'configured to' perform a designated task if it is designed, coupled, and/or interconnected to perform said designated task. As a purely illustrative example, a logic gate may provide a 0 or a 1 during operation. But a logic gate 'configured to' provide an enable signal to a clock does not include every potential logic gate that may provide a 1 or 0. Instead, the logic gate is one coupled in some manner that during operation the 1 or 0 output is to enable the clock. Note once again that use of the term 'configured to' does not require operation, but instead focus on the latent state of an apparatus, hardware, and/or element, where in the latent state the apparatus, hardware, and/or element is designed to perform a particular task when the apparatus, hardware, and/or element is operating.

Furthermore, use of the phrases 'capable of/to,' and or 'operable to,' in one embodiment, refers to some apparatus, logic, hardware, and/or element designed in such a way to enable use of the apparatus, logic, hardware, and/or element in a specified manner. Note as above that use of to, capable to, or operable to, in one embodiment, refers to the latent state of an apparatus, logic, hardware, and/or element, where the apparatus, logic, hardware, and/or element is not operating but is designed in such a manner to enable use of an apparatus in a specified manner.

A value, as used herein, includes any known representation of a number, a state, a logical state, or a binary logical state. Often, the use of logic levels, logic values, or logical values is also referred to as 1's and 0's, which simply represents binary logic states. For example, a 1 refers to a high logic level and 0 refers to a low logic level. In one embodiment, a storage cell, such as a transistor or flash cell, may be capable of holding a single logical value or multiple logical values. However, other representations of values in computer systems have been used. For example, the decimal number ten may also be represented as a binary value of 418A0 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one embodiment, refer to a default and an updated value or state, respectively. For example, a default value potentially includes a high logical value, e.g., reset, while an updated value potentially includes a low logical value, e.g., set. Note that any combination of values may be utilized to represent any number of states.

The embodiments of methods, hardware, software, firmware, or code set forth above may be implemented via instructions or code stored on a machine-accessible, machine readable, computer accessible, or computer readable medium which are executable by a processing element. A non-transitory machine-accessible/readable medium includes any mechanism that provides (e.g., stores and/or transmits) information in a form readable by a machine, such as a computer or electronic system. For example, a non-transitory machine-accessible medium includes random-access memory (RAM), such as static RAM (SRAM) or dynamic RAM (DRAM); ROM; magnetic or optical storage medium; flash memory devices; electrical storage devices; optical storage devices; acoustical storage devices; other form of storage devices for holding information received from transitory (propagated) signals (e.g., carrier waves, infrared signals, digital signals); etc., which are to be distinguished from the non-transitory mediums that may receive information there from.

Instructions used to program logic to perform embodiments of the disclosure may be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer).

The following examples pertain to embodiments in accordance with this Specification. Example 1 is an apparatus including: a network controller, where the network controller is coupled to a memory associated with a hardware accelerator, and the network controller includes: a first port to couple to a host system, where the host system includes system memory; a second port to receive data over a network; and circuitry to: determine that the data is to be written directly to the memory instead of to the system memory; and write the data to the memory for consumption by the hardware accelerator.

Example 2 includes the subject matter of example 1, where the network controller is coupled to the memory by an interconnect fabric and the interconnect fabric is to couple the hardware accelerator to the memory.

Example 3 includes the subject matter of example 2, where the interconnect fabric includes a network on chip.

Example 4 includes the subject matter of any one of examples 1-3, where the memory includes high-bandwidth memory (HBM).

Example 5 includes the subject matter of any one of examples 1-4, where a default path for data exchanged between the network controller and the hardware accelerator includes copying the data into system memory before the data is copied to the memory for access by the hardware accelerator.

Example 6 includes the subject matter of example 5, where a determination that the data is to be written directly to the memory instead of to the system memory is based on a low latency task to be performed by the hardware accelerator.

Example 7 includes the subject matter of example 6, where the determination is based at least in part on use of the hardware accelerator in a low latency application, where the low latency application includes the low latency task.

Example 8 includes the subject matter of example 7, where the low latency application is to govern autonomous movement of a given machine within a physical environment.

Example 9 includes the subject matter of any one of examples 7-8, where the network controller receives the data in a packet and is further to parse the packet to identify characteristics of the data, and the determination is based on the characteristics.

Example 10 includes the subject matter of any one of examples 7-8, where the network controller is to receive information from a driver in association with the low latency task, and the determination is based on the information.

Example 11 includes the subject matter of any one of examples 1-10, where a determination that the data is to be written directly to the memory instead of to the system memory is based on a packet descriptor in a queue for the network controller, and the packet descriptor corresponds to the data.

Example 12 includes the subject matter of example 11, where the packet descriptor includes a field to indicate whether the data is to be written directly to the memory instead of to the system memory.

Example 13 includes the subject matter of any one of examples 11-12, where the queue is implemented in the system memory.

Example 14 includes the subject matter of any one of examples 11-13, where the queue includes a first queue for packet descriptors of data to be written directly to the memory, and a second queue for the network controller includes packet descriptors of data to be written first to system memory.

Example 15 includes the subject matter of any one of examples 1-14, where the network controller is further to: receive an indication that result data is written to the memory by the hardware accelerator; directly access the result data from the memory instead of system memory based on the indication; and transmit at least a portion of the result data on the network.

Example 16 is a non-transitory machine-readable storage medium with instructions stored thereon, the instructions executable by a machine to cause the machine to: identify data to be written to a high-bandwidth memory by a network controller for consumption by a hardware accelerator device, where the network controller is coupled to the high-bandwidth memory and a host system, and the host system includes host memory; receive a message from a driver of the hardware accelerator over an interface at a driver of the network controller to indicate one or more addresses in the high-bandwidth memory to be used by the network controller; and form one or more packet descriptors in a queue for the network controller to point to the one or more addresses in the high-bandwidth memory, where the packet descriptors indicate to the network controller that associated data is to be written directly to the high-bandwidth memory instead of system memory.

Example 17 is a system including: a hardware accelerator; a local memory; an interconnect fabric; a network controller, where the interconnect fabric connects the hardware accelerator and the network controller to the local memory, and the network controller includes: a first port to couple to a host system, where the host system includes system memory; a second port to receive data from a network; and circuitry to: determine that the data is to be written directly to the local memory instead of the system memory over the interconnect fabric; and write the data to the local memory, where the hardware accelerator is to access the data from the local memory.

Example 18 includes the subject matter of example 17, further including the host system.

Example 19 includes the subject matter of any one of examples 17-18, where the hardware accelerator, local memory, interconnect fabric, and network controller are included in the same device, where the device includes one of a same card, a same package, or a same die.

Example 20 includes the subject matter of any one of examples 17-19, where the interconnect fabric includes a network on chip device and the local memory includes a high-bandwidth memory.

Example 21 includes the subject matter of any one of examples 17-20, where the hardware accelerator includes one of a graphics processing unit, a machine learning accelerator, a tensor processing unit, or an infrastructure processing unit.

Example 22 includes the subject matter of any one of examples 17-21, further including: a network controller driver for the network controller; and a hardware accelerator driver for the hardware accelerator, where the network controller driver and the hardware accelerator driver are to implement an interface to communicate location of data written to the local memory when the data is written directly to the local memory instead of through copies to the system memory.

Example 23 includes the subject matter of any one of examples 17-22, where a default path for data exchanged between the network controller and the hardware accelerator includes copying the data into system memory before the data is copied to the memory for access by the hardware accelerator.

Example 24 includes the subject matter of example 23, where a determination that the data is to be written directly to the memory instead of to the system memory is based on a low latency task to be performed by the hardware accelerator.

Example 25 includes the subject matter of example 24, where the determination is based at least in part on use of the hardware accelerator in a low latency application, where the low latency application includes the low latency task.

Example 26 includes the subject matter of example 25, where the low latency application is to govern autonomous movement of a given machine within a physical environment.

Example 27 includes the subject matter of example 25, where the network controller receives the data in a packet and is further to parse the packet to identify characteristics of the data, and the determination is based on the characteristics.

Example 28 includes the subject matter of example 25, where the network controller is to receive information from a driver in association with the low latency task, and the determination is based on the information.

Example 29 includes the subject matter of any one of examples 17-28, where a determination that the data is to be written directly to the memory instead of to the system memory is based on a packet descriptor in a queue for the network controller, and the packet descriptor corresponds to the data.

Example 30 includes the subject matter of example 29, where the packet descriptor includes a field to indicate whether the data is to be written directly to the memory instead of to the system memory.

Example 31 includes the subject matter of example 29, where the queue is implemented in the system memory.

Example 32 includes the subject matter of example 29, where the queue includes a first queue for packet descriptors of data to be written directly to the memory, and a second queue for the network controller includes packet descriptors of data to be written first to system memory.

Example 33 includes the subject matter of any one of examples 17-32, where the network controller is further to: receive an indication that result data is written to the memory by the hardware accelerator; directly access the result data from the memory instead of system memory based on the indication; and transmit at least a portion of the result data on the network.

Example 34 is a method including: receiving data over a network at a network controller, where the network controller is coupled to a memory associated with a hardware accelerator and is further coupled to a host system, where the host system includes system memory; determining, at the network controller, that the data is to be written directly to the memory instead of to the system memory; and writing the data directly by the network controller to the memory for consumption by the hardware accelerator.

Example 35 includes the subject matter of example 34, further including: identifying, at the network controller, result data written to the memory by the hardware accelerator; directly accessing, at the network controller, the result data from the memory without the result data being copied to the system memory; and sending at least a portion of the result data on the network using the network controller.

Example 36 includes the subject matter of any one of examples 34-35, where the network controller includes the network controller of any one of examples 1-15.

Example 37 is a system including means to perform the method of any one of examples 34-36.

Example 38 is a method including: identifying data to be written to a high-bandwidth memory by a network controller for consumption by a hardware accelerator device, where the network controller is coupled to the high-bandwidth memory and a host system, and the host system includes host memory; receiving a message from a driver of the hardware accelerator over an interface at a driver of the network controller to indicate one or more addresses in the high-bandwidth memory to be used by the network controller; forming one or more packet descriptors in a queue for the network controller to point to the one or more addresses in the high-bandwidth memory, where the packet descriptors indicate to the network controller that associated data is to be written directly to the high-bandwidth memory instead of system memory.

Example 39 is a system including means to perform the method of example 38.

Reference throughout this specification to "one embodiment" or "an embodiment" means that a particular feature, structure, or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In the foregoing specification, a detailed description has been given with reference to specific exemplary embodiments. It will, however, be evident that various modifications and changes may be made thereto without departing from the broader spirit and scope of the disclosure as set forth in the appended claims. The specification and drawings are, accordingly, to be regarded in an illustrative sense rather than a restrictive sense. Furthermore, the foregoing use of embodiment and other exemplarily language does not necessarily refer to the same embodiment or the same example, but may refer to different and distinct embodiments, as well as potentially the same embodiment.

## Claims

1. An apparatus comprising:
a network controller, wherein the network controller is to couple to a memory associated with a processor device, and the network controller comprises:
a first interface to couple to a host system, wherein the host system comprises system memory;
a second interface to receive data over a network;
determine that the data is to be written to the memory instead of to the system memory based at least in part on a field of a packet descriptor associated with the data; and
write the data to the memory for consumption by the processor device.

2. The apparatus of Claim 1, wherein the network controller is coupled to the memory by an interconnect fabric and the interconnect fabric is to couple the processor device to the memory.

3. The apparatus of Claim 1, wherein the memory comprises high-bandwidth memory (HBM).

4. The apparatus of Claim 1, wherein the processor device comprises a hardware accelerator.

5. The apparatus of any one of Claims 1-4, wherein a determination that the data is to be written directly to the memory instead of to the system memory is based on a low latency task to be performed by the processor device.

6. The apparatus of Claim 5, wherein the determination is based at least in part on use of the processor device in a low latency application, wherein the low latency application comprises the low latency task.

7. The apparatus of Claim 6, wherein the low latency application is to govern autonomous movement of a given machine within a physical environment.

8. The apparatus of Claim 6, wherein the network controller receives the data in a packet and is further to parse the packet to identify characteristics of the data, and the determination is based on the characteristics.

9. The apparatus of Claim 6, wherein the network controller is to receive information from a driver in association with the low latency task, and the determination is based on the information.

10. The apparatus of any one of Claims 1-9, wherein a determination that the data is to be written directly to the memory instead of to the system memory is based on the packet descriptor and a traffic class determined for the data.

11. The apparatus of any one of Claims 1-10, wherein the packet descriptor is one of a plurality of packet descriptors in a queue implemented in the system memory.

12. The apparatus of Claim 11, wherein the queue comprises a first queue for packet descriptors of data to be written directly to the memory, and a second queue for the network controller comprises packet descriptors of data to be written first to system memory.

13. The apparatus of any one of Claims 1-12, wherein the network controller is further to:
receive an indication that result data is written to the memory by the processor device;
directly access the result data from the memory instead of system memory based on the indication; and
transmit at least a portion of the result data on the network.

14. The apparatus of Claim 13, wherein the indication comprises a packet descriptor mapped to the result data, wherein the packet descriptor mapped to the result data comprises a HBM mode bit set to indicate that the result data is to be directly accessed from the memory instead of system memory.
